(19)

Europäisches
Patentamt
European
Patent Office
Office européen
des brevets

(11) **EP 4 725 985 A1**

(12) **EUROPEAN PATENT APPLICATION**
published in accordance with Art. 153(4) EPC

(43) Date of publication:
**15.04.2026 Bulletin 2026/16**

(21) Application number: **24819403.7**

(22) Date of filing: **06.06.2024**

(51) International Patent Classification (IPC):
*C08J 11/24* (2006.01)       *B60C 1/00* (2006.01)
*C08J 3/24* (2006.01)        *C08J 11/28* (2006.01)
*C08K 3/04* (2006.01)        *C08K 5/00* (2006.01)
*C08K 5/05* (2006.01)        *C08K 5/17* (2006.01)
*C08K 5/36* (2006.01)        *C08K 5/37* (2006.01)
*C08K 5/39* (2006.01)        *C08K 5/49* (2006.01)
*C08K 5/521* (2006.01)       *C08K 5/1539* (2006.01)
*C08K 13/02* (2006.01)       *C08L 15/00* (2006.01)
*C08L 21/00* (2006.01)       *C08L 101/02* (2006.01)

(52) Cooperative Patent Classification (CPC):
Y02W 30/62

(86) International application number:
**PCT/JP2024/020773**

(87) International publication number:
**WO 2024/253176 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023   JP 2023095783**
**09.06.2023   JP 2023095784**
**22.06.2023   JP 2023102451**
**28.12.2023   JP 2023222837**
**28.12.2023   JP 2023222838**

(71) Applicant: **ENEOS Materials Corporation
Tokyo 105-7109 (JP)**

(72) Inventor: **CHINO, Keisuke
Tokyo 100-8162 (JP)**

(74) Representative: **Müller-Boré & Partner
Patentanwälte PartG mbB
Friedenheimer Brücke 21
80639 München (DE)**

(54) **THERMOPLASTIC ELASTOMER COMPOSITION AND ELASTOMER MATERIAL FOR TIRE USING SAME**

(57)     A thermoplastic elastomer composition, comprising:
an elastomeric polymer containing a hydrogen-bond cross-linking moiety and a covalent-bond cross-linking moiety in a side chain and having a glass-transition point of 25°C or below;
carbon black;
a phosphorus-based plasticizer; and
at least one vulcanization accelerator selected from the group consisting of a thiuram-based vulcanization accelerator and a metal dithiocarbamate which is a metal salt of the thiuram-based vulcanization accelerator.

EP 4 725 985 A1

## Description

Technical Field

The present invention relates to a thermoplastic elastomer composition and an elastomer material for a tire using the same.

Background Art

A thermoplastic elastomer composition is an extremely useful material in industry because it melts at a processing temperature during its molding and can be molded by a known resin molding method. As such a thermoplastic elastomer composition, for example, International Publication No. WO2017/047274 (PTL 1) discloses a thermoplastic elastomer composition comprising: at least one elastomer component selected from the group consisting of elastomeric polymers (A) each of which has a side chain (a) containing a hydrogen-bond cross-linking moiety having a carbonyl-containing group and/or a nitrogen-containing heterocycle and has a glass-transition point of 25°C or below, and elastomeric polymers (B) each of which contains a hydrogen-bond cross-linking moiety and a covalent-bond cross-linking moiety in a side chain and has a glass-transition point of 25°C or below; a clay in a content ratio of 20 parts by mass or less relative to 100 parts by mass of the elastomer component; and an α-olefin-based resin having no chemical-bond cross-linking moiety. Note that International Publication No. WO2017/047274 (PTL 1) also discloses that carbon black can be used as a reinforcing material.

Citation List

Patent Literature

PTL 1: International Publication No. WO2017/047274

Summary of Invention

Technical Problem

However, the conventional thermoplastic elastomer composition as described in Patent Document 1 was not necessarily sufficient in terms of imparting a high level of heat resistance that makes it possible to achieve excellent breaking strength and elongation at break upon heating, while also achieving sufficiently high levels of both wear resistance and resistance to compression set.
The present invention has been made in view of the problem of the conventional technique, and an object of the present invention is to provide a thermoplastic elastomer composition that, while achieving sufficiently high levels of both wear resistance and creep resistance based on resistance to compression set, is excellent in breaking strength and elongation at break upon heating and is capable of achieving a high level of heat resistance based on breaking strength and elongation at break upon heating, as well as an elastomer material for a tire using the same.

Solution to Problem

The present inventors have conducted intensive studies to achieve the above-described object, and consequently have found that by making a thermoplastic elastomer composition comprise an elastomeric polymer containing a hydrogen-bond cross-linking moiety and a covalent-bond cross-linking moiety in a side chain and having a glass-transition point of 25°C or below, carbon black, a phosphorus-based plasticizer, and the following specific vulcanization accelerator, it is possible to provide a thermoplastic elastomer composition that, while achieving sufficiently high levels of both wear resistance and creep resistance based on resistance to compression set, is excellent in breaking strength and elongation at break upon heating and is capable of achieving a high level of heat resistance based on breaking strength and elongation at break upon heating; this finding has led to the completion of the present invention.
That is, the present invention provides the following aspects.

[1] A thermoplastic elastomer composition, comprising:

an elastomeric polymer containing a hydrogen-bond cross-linking moiety and a covalent-bond cross-linking moiety in a side chain and having a glass-transition point of 25°C or below;
carbon black;

a phosphorus-based plasticizer; and

at least one vulcanization accelerator selected from the group consisting of a thiuram-based vulcanization accelerator and a metal dithiocarbamate which is a metal salt of the thiuram-based vulcanization accelerator.

[2] The thermoplastic elastomer composition according to [1], wherein the phosphorus-based plasticizer is a phosphate ester.

[3] The thermoplastic elastomer composition according to [1] or [2], wherein the phosphorus-based plasticizer is tris(2-ethylhexyl) phosphate.

[4] The thermoplastic elastomer composition according to any one of [1] to [3], wherein the vulcanization accelerator is at least one thiuram-based vulcanization accelerator selected from the group consisting of tetrakis(2-ethylhexyl) thiuram disulfide, tetramethylthiuram disulfide, tetraethylthiuram disulfide, tetrabutylthiuram disulfide, tetramethylthiuram monosulfide, tetrabenzylthiuram disulfide, and dipentamethylenethiuram tetrasulfide.

[5] The thermoplastic elastomer composition according to any one of [1] to [4], wherein the vulcanization accelerator is at least one thiuram-based vulcanization accelerator selected from the group consisting of tetrabutylthiuram disulfide and tetrakis(2-ethylhexyl) thiuram disulfide.

[6] The thermoplastic elastomer composition according to any one of [1] to [5], wherein the elastomeric polymer is a reaction product of an elastomeric polymer having a cyclic acid anhydride group in a side chain and a compound having two or more of at least one selected from a hydroxyl group, a thiol group, an amino group, and an imino group in one molecule.

[7] An elastomer material for a tire, comprising the thermoplastic elastomer composition according to any one of [1] to [6].

Advantageous Effects of Invention

According to the present invention, it is possible to provide a thermoplastic elastomer composition that, while achieving sufficiently high levels of both wear resistance and creep resistance based on resistance to compression set, is excellent in breaking strength and elongation at break upon heating and is capable of achieving a high level of heat resistance based on breaking strength and elongation at break upon heating, as well as an elastomer material for a tire using the same.

Description of Embodiments

Hereinafter, the present invention is described in detail with reference to preferred embodiments thereof. Note that in the present specification, unless otherwise specified, the notation "X to Y" regarding numerical values X and Y shall mean "X or more and Y or less". In such notation, when a unit is attached only to the numerical value Y, that unit shall also be applied to the numerical value X.

[Thermoplastic Elastomer Composition]

A thermoplastic elastomer composition of the present invention comprises:

an elastomeric polymer containing a hydrogen-bond cross-linking moiety and a covalent-bond cross-linking moiety in a side chain and having a glass-transition point of 25°C or below;
carbon black;
a phosphorus-based plasticizer; and
at least one vulcanization accelerator selected from the group consisting of a thiuram-based vulcanization accelerator and a metal dithiocarbamate which is a metal salt of the thiuram-based vulcanization accelerator.

Hereinafter, each of the components is first described.

(Elastomeric Polymer)

The elastomeric polymer according to the present invention is an elastomeric polymer containing a hydrogen-bond cross-linking moiety and a covalent-bond cross-linking moiety in a side chain and having a glass-transition point of 25°C or below (hereinafter sometimes simply referred to as "elastomeric polymer (A)" for convenience). In such an elastomeric polymer (A), the "side chain" refers to a side chain and a terminal of the elastomeric polymer. In addition, the "containing a hydrogen-bond cross-linking moiety and a covalent-bond cross-linking moiety in a side chain" is a concept including a case where a side chain having a hydrogen-bond cross-linking moiety (hereinafter, sometimes referred to as "side chain (a')" for convenience) and a side chain having a covalent-bond cross-linking moiety (hereinafter, sometimes referred to as "side chain (b)" for convenience) are both contained, so that both a hydrogen-bond cross-linking moiety and a covalent-bond cross-linking moiety are contained in the side chains of a polymer, as well as a case where a side chain having both a hydrogen-bond cross-linking moiety and a covalent-bond cross-linking moiety (a single side chain containing both a hydrogen-bond cross-linking moiety and a covalent-bond cross-linking moiety therein: hereinafter, such a side chain is sometimes referred to as "side chain (c)" for convenience) is contained, so that both a hydrogen-bond cross-linking moiety and a covalent-bond cross-linking moiety are contained in the side chains of a polymer. Note that as such an elastomeric polymer (A), it is also possible to use one selected, as appropriate, from those described in JP 5918878 B1 (for example, those described in paragraphs [0032] to [0145] of the same publication) that corresponds to an elastomeric polymer containing a hydrogen-bond cross-linking moiety and a covalent-bond cross-linking moiety in a side chain and having a glass-transition point of 25°C or below.

The main chain (a polymer forming the main chain portion) of such an elastomeric polymer (A) may be a generally known natural polymer or synthetic polymer, and only needs to be a polymer whose glass-transition point is room temperature (25°C) or below (only needs to consist of a so-called elastomer), and is not particularly limited.

The main chain of such an elastomeric polymer (A) is preferably at least one selected from diene-based rubbers, hydrogenated products of diene-based rubbers, olefin-based rubbers, polystyrene-based elastomeric polymers which may be hydrogenated, polyolefin-based elastomeric polymers, polyvinyl chloride-based elastomeric polymers, polyurethane-based elastomeric polymers, polyester-based elastomeric polymers, and polyamide-based elastomeric polymers. The main chain of such an elastomeric polymer is desirably one that is easily increased in molecular weight for improving heat resistance and creep resistance, and from such a viewpoint, is preferably at least one selected from the group consisting of diene-based rubbers, hydrogenated products of diene-based rubbers, and olefin-based rubbers.

When the finally obtained composition is used as a material for producing a rubber product (preferably a tire, a belt, or a hose), the elastomeric polymer (A) preferably comprises an elastomeric polymer having a diene-based rubber as a main chain and/or an elastomeric polymer having a hydrogenated product of a diene-based rubber as a main chain, from the viewpoint that a product with higher performance can be obtained. Because the elongation at break and breaking strength become more excellent, it is preferable to use in combination an elastomeric polymer having a diene-based rubber as a main chain and/or an elastomeric polymer having a hydrogenated product of a diene-based rubber as a main chain (more preferably an elastomeric polymer having a hydrogenated product of a diene-based rubber as a main chain) and an elastomeric polymer having an olefin-based rubber as a main chain. By using an elastomeric polymer having a diene-based rubber as a main chain and/or an elastomeric polymer having a hydrogenated product of a diene-based rubber as a main chain in combination with an elastomeric polymer having an olefin-based rubber as a main chain in this manner, deterioration of the composition derived from double bonds can be suppressed to a higher degree.

Here, when the composition is used as a material for producing a rubber product (preferably a tire, a belt, or a hose), the diene-based rubber and the hydrogenated product of a diene-based rubber that can constitute the main chain are more preferably at least one selected from the group consisting of styrene-butadiene copolymer, hydrogenated styrene-butadiene copolymer, butadiene-acrylonitrile copolymer, hydrogenated butadiene-acrylonitrile copolymer, hydrogenated butadiene polymer, isoprene-based polymers (including natural rubber, epoxidized isoprene polymer, epoxidized natural rubber, and hydrogenated products), and butyl-based polymers (including butyl rubber and hydrogenated products), and further preferably at least one selected from the group consisting of hydrogenated styrene-butadiene copolymer, butadiene-acrylonitrile copolymer, and hydrogenated butadiene-acrylonitrile copolymer, and particularly preferably a hydrogenated styrene-butadiene copolymer, from the viewpoint that a product with higher performance can be obtained. The olefin-based rubber is not particularly limited, but from the viewpoint of high anti-aging property, ethylene-propylene rubber (EPM: ethylene-propylene copolymer) and ethylene-butene rubber (EBM: ethylene-butene copolymer) can be preferably used.

The main chain of such an elastomeric polymer (A) preferably includes a monomer unit containing a double bond in a site forming the main chain backbone (double bond-containing monomer unit). Note that the "monomer unit containing a double bond (double bond-containing monomer unit)" herein refers to a monomer unit containing a double bond in a portion forming the main chain backbone (a portion other than a side chain), not in a side chain portion, and examples thereof include a monomer unit represented by the formula: $-CH_2-CH=CH-CH_2-$ among monomer units derived from butadiene, and a monomer unit represented by the formula: $-CH_2-C(CH_3)=CH-CH_2-$ among monomer units derived from isoprene.

Note that in the present invention, when the main chain of the elastomeric polymer (A) contains a double bond-containing monomer unit in a site forming the main chain backbone, the vulcanization accelerator can react with the double bond in the main chain; for this reason, the elastomeric polymer (A) and the vulcanization accelerator may be contained in the composition in the form of a reaction product thereof. For example, when an elastomeric polymer having a diene-based rubber as a main chain and/or an elastomeric polymer having a hydrogenated product of a diene-based rubber as a main chain is used as the elastomeric polymer (A), since these elastomeric polymers basically have a double bond-containing monomer unit in the main chain backbone, it is considered that the vulcanization accelerator can react with the double bond in the main chain, and at least a part (or all) of these elastomeric polymers may be contained in the composition in the form of a reaction product with the vulcanization accelerator. Note that when such an elastomeric polymer (A) is in the form of a reaction product with a vulcanization accelerator, the elastomeric polymer (A) contains a hydrogen-bond cross-linking moiety and a covalent-bond cross-linking moiety in a side chain, and may also contain a dithiocarbamate group in a side chain, depending on the type of the vulcanization accelerator.

One of these elastomeric polymers (A) may be used alone, or two or more thereof may be used as a mixture. The glass-transition point of the elastomeric polymer (A) is 25°C or below as described above. By setting the glass-transition point to 25°C or below, it becomes possible to impart higher flexibility in a normal use temperature range (room temperature (25°C) or higher). In the present invention, the "glass-transition point" is a glass-transition point measured by differential scanning calorimetry (DSC - Differential Scanning Calorimetry). For the measurement of the glass-transition point, the rate of temperature rise is preferably 10°C/min. Such an elastomeric polymer exhibits rubber-like elasticity at room temperature (about 25°C).

As described above, the elastomeric polymer (A) has at least one of "a side chain (a') containing a hydrogen-bond cross-linking moiety and a side chain (b) containing a covalent-bond cross-linking moiety" and "a side chain (c) containing a hydrogen-bond cross-linking moiety and a covalent-bond cross-linking moiety" as a side chain. Note that, in the present invention, the side chain (c) can also be regarded as a side chain functioning as a side chain (a') and also as a side chain (b). Each of the side chains is described below.

<Side Chain (a'): Side Chain Containing Hydrogen-Bond Cross-Linking Moiety>

The side chain (a') containing a hydrogen-bond cross-linking moiety may be any, and the structure thereof is not particularly limited, as long as the side chain has a group that can form a cross-link by hydrogen bonding (for example, a hydroxyl group, a hydrogen-bond cross-linking moiety contained in the side chain (a) described later, or the like), and forms a hydrogen bond on the basis of the group. Here, the hydrogen-bond cross-linking moiety is a moiety through which molecules of the elastomeric polymer are cross-linked to each other by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like); hence, when both a hydrogen acceptor and a hydrogen donor are not present in side chains of elastomeric polymer molecules, no cross-linkage by a hydrogen bond is formed. For this reason, only when both a hydrogen acceptor and a hydrogen donor are present in side chains of elastomeric polymer molecules, a hydrogen-bond cross-linking moiety can be considered to be present in the system. Note that, in the present invention, if both a portion that can function as a hydrogen acceptor (for example, a carbonyl group or the like) and a portion that can function as a hydrogen donor (for example, a hydroxyl group or the like) are present in side chains of elastomeric polymer molecules, the portion that can function as a hydrogen acceptor and the portion that can function as a donor of the side chains can be considered to be hydrogen-bond cross-linking moieties.

The hydrogen-bond cross-linking moiety in such a side chain (a') is more preferably a "side chain (a) containing a hydrogen-bond cross-linking moiety having a carbonyl-containing group and/or a nitrogen-containing heterocycle" as described below from the viewpoint of forming a stronger hydrogen bond.

<Side Chain (a): Side Chain Containing Hydrogen-Bond Cross-Linking Moiety Having Carbonyl-Containing Group and/or Nitrogen-Containing Heterocycle>

The side chain (a) containing a hydrogen-bond cross-linking moiety having a carbonyl-containing group and/or a nitrogen-containing heterocycle may be any, as long as the side chain has a carbonyl-containing group and/or a nitrogen-containing heterocycle, and the other aspects of the structure are not particularly limited. The hydrogen-bond cross-linking moiety more preferably has a carbonyl-containing group and a nitrogen-containing heterocycle. Note that "a side chain (a) containing a hydrogen-bond cross-linking moiety having a carbonyl-containing group and/or a nitrogen-containing heterocycle" herein means one in which a carbonyl-containing group and/or a nitrogen-containing heterocycle (more preferably, a carbonyl-containing group and a nitrogen-containing heterocycle) serving as the hydrogen-bond cross-linking moiety is chemically stably bonded (covalently bonded) to an atom (generally, a carbon atom) forming a main chain of the elastomeric polymer.

The carbonyl-containing group is not particularly limited, as long as the group contains a carbonyl group; specific examples thereof include amide, ester, imide, carboxy group, carbonyl group, thioester group, acid anhydride group, and the like. Such a carbonyl-containing group may be a group introduced into the main chain (the polymer of the main chain portion) using a compound capable of introducing a carbonyl-containing group into the main chain. The compound capable of introducing such a carbonyl-containing group into the main chain is not particularly limited, and specific examples thereof include ketones, carboxylic acids and derivatives thereof, and the like. Note that as the compound capable of introducing a carbonyl-containing group into the main chain, such as a carboxylic acid and a derivative thereof, a known one (for example, one described in paragraphs [0051] to [0053] of JP 5918878 B1 or the like) can be used, as appropriate. A compound that can introduce such a carbonyl group (carbonyl-containing group) is preferably a cyclic acid anhydride such as succinic anhydride, maleic anhydride, glutaric anhydride, or phthalic anhydride, and particularly preferably maleic anhydride.

When the side chain (a) has a nitrogen-containing heterocycle, the structure or the like of the nitrogen-containing heterocycle is not particularly limited, as long as the nitrogen-containing heterocycle is introduced to the side chain (a) directly or through an organic group. It is also possible to use, as the nitrogen-containing heterocycle, one containing a heteroatom other than a nitrogen atom, such as a sulfur atom, an oxygen atom, or a phosphorus atom in the heterocycle, as long as the heterocycle contains a nitrogen atom. Note that such a nitrogen-containing heterocycle may have a substituent. Here, when the nitrogen-containing heterocycle is contained in the side chain (a), the heterocycle structure results in a stronger hydrogen bond forming the cross-linkage, and the durability and impact resistance of the composition tend to be improved. In addition, the nitrogen-containing heterocycle is preferably a 5-membered ring and/or a 6-membered ring from the viewpoint that stronger hydrogen bonding is formed and resistance to compression set and mechanical strength are further improved. In addition, the nitrogen-containing heterocycle may be one in which a nitrogen-containing heterocycle and a benzene ring are condensed or one in which nitrogen-containing heterocycles are condensed. As the nitrogen-containing heterocycle, a known one (for example, one described in paragraphs [0054] to [0067] of JP 5918878 B1, one described in paragraphs [0035] to [0048] of Japanese Unexamined Patent Application Publication No. 2017-206604, or the like) can be used, as appropriate. Note that such a nitrogen-containing heterocycle may have a substituent.

The nitrogen-containing heterocycle is preferably at least one selected from a triazole ring, an isocyanurate ring, a thiadiazole ring, a pyridine ring, an imidazole ring, a triazine ring, and a hydantoin ring each of which may have a substituent, and is preferably at least one selected from a triazole ring, a thiadiazole ring, a pyridine ring, an imidazole ring, and a hydantoin ring each of which may have a substituent, from the viewpoint of excellence in recyclability, compression set, hardness, and mechanical strengths, especially, tensile strength.

Examples of substituents the nitrogen-containing heterocycle may have include a hydroxyl group, an amino group, an imino group, a carboxy group, an isocyanate group, an epoxy group, an alkoxysilyl group, a thiol group (a mercapto group), and the like. It is also possible to use, as such a substituent, an alkyl group such as a methyl group, an ethyl group, an (iso)propyl group, or a hexyl group; an alkoxy group such as a methoxy group, an ethoxy group, or an (iso) propoxy group; a group consisting of a halogen atom such as a fluorine atom, a chlorine atom, a bromine atom, or an iodine atom; a cyano group; an amino group; an imino group; an aromatic hydrocarbon group; an ester group; an ether group; an acyl group; a thioether group; or the like. Moreover, the position of substitution with such a substituent is not particularly limited, and the number of the substituents is not limited, either.

When the side chain (a) contains both the above-described carbonyl-containing group and the above-described nitrogen-containing heterocycle, the carbonyl-containing group and the nitrogen-containing heterocycle may be introduced to the main chain as side chains different from each other, but are preferably introduced to the main chain as a single side chain in which the above-described carbonyl-containing group and the above-described nitrogen-containing heterocycle are linked to each other through another group. For example, the side chain (a) may have a structure as described in paragraphs [0068] to [0081] of JP 5918878 B1 or the like.

The side chain (a) is preferably one in which a hydrogen-bond cross-linking moiety is formed by using an elastomeric polymer having a cyclic acid anhydride group as a functional group and reacting the functional group (cyclic acid anhydride group) with a compound that reacts with the cyclic acid anhydride group to form a hydrogen-bond cross-linking moiety (a compound capable of introducing a nitrogen-containing heterocycle), thereby making the polymer side chain a side chain (a). Such a compound that forms a hydrogen-bond cross-linking moiety (a compound capable of introducing a nitrogen-containing heterocycle) may be the above-described nitrogen-containing heterocycle itself, or may be a nitrogen-containing heterocycle having a substituent that reacts with a cyclic acid anhydride group such as maleic anhydride (for example, a hydroxyl group, a thiol group, an amino group, or the like) .

<Side Chain (b): Side Chain Containing Covalent-Bond Cross-Linking Moiety>

In the present specification, "a side chain (b) containing a covalent-bond cross-linking moiety" means a side chain containing a moiety that cross-links molecules of a polymer forming a main chain by a covalent bond (a covalent-bond cross-linking moiety: for example, a moiety in which polymer molecules are cross-linked by a chemically stable bond (covalent bond) such as at least one bond selected from the group consisting of amide, ester, and thioester, which can be formed by a reaction between a functional group of a polymer (a polymer that forms the main chain after reaction) used as a raw material and a compound that forms a covalent-bond cross-linking moiety (a compound that forms a covalent bond)). Thus, the "covalent-bond cross-linking moiety" is a moiety in which elastomeric polymer molecules are cross-linked by a covalent bond. Note that the side chain (b) is a side chain containing a covalent-bond cross-linking moiety, but will be used as a side chain (c) described later when it has a covalent bonding moiety, and further has a group capable of hydrogen bonding, to form cross-linking between side chains by hydrogen bonding (note that when both a hydrogen donor and a hydrogen acceptor, which enable the formation of hydrogen bonding between side chains of molecules of the elastomeric polymer, are not contained, for example, when only side chains simply containing ester groups (-COO-) are present in a system, hydrogen bonding is not particularly formed between the ester groups (-COO-), and hence such a group does not function as a hydrogen-bond cross-linking moiety. Meanwhile, for example, when side chains of molecules of the polymer each contain a structure having both a moiety serving as a hydrogen donor in a hydrogen bond and a moiety serving as a hydrogen acceptor in the hydrogen bond as in the case of a carboxy group or a triazole ring, hydrogen bonding is formed between the side chains of the molecules of the elastomeric polymer, and hence hydrogen-bond cross-linking moieties will be contained. In addition, for example, when an ester group and a hydroxyl group are coexistent in side chains of molecules of the elastomeric polymer and a hydrogen bond is formed by these groups between side chains, the moieties forming the hydrogen bond become hydrogen-bond cross-linking moieties. For this reason, a side chain (b) may sometimes be used as a side chain (c) depending on the structure itself of the side chain (b), the structure of the side chain (b) and the type of the substituent of another side chain, or the like).

The side chain (b) containing a covalent-bond cross-linking moiety is not particularly limited, but is preferably one containing a covalent-bond cross-linking moiety formed by reacting an elastomeric polymer having a functional group in a side chain (a polymer for forming the main chain portion) with a compound that reacts with the functional group to form a covalent-bond cross-linking moiety (a compound that forms a covalent bond). The cross-linking in the covalent-bond cross-linking moiety of the side chain (b) is preferably formed by at least one bond selected from the group consisting of amide, ester, lactone, urethane, urea, ether, thiourethane, and thioether (hereinafter, such a bond is sometimes simply referred to as "bond (A)"). For this reason, the functional group of the polymer for forming the main chain portion (hereinafter sometimes referred to as "polymer for constituting the main chain") is preferably a functional group capable of causing the bond (A). Note that the bond (A) is more preferably at least one bond selected from the group consisting of amide, ester, lactone, urethane, ether, thiourethane, and thioether.

Examples of the "compound that forms a covalent-bond cross-linking moiety (compound that forms a covalent bond)" include polyamine compounds having two or more amino and/or imino groups in one molecule (when both amino and imino groups are present, the total number of these groups is two or more); polyol compounds having two or more hydroxyl groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (the compound that forms a covalent bond) " herein can be a compound capable of introducing both the hydrogen-bond cross-linking moiety and the covalent-bond cross-linking moiety depending on the type of the substituent of the compound, the degree of the progress of a reaction in a case where the reaction is carried out by using such a compound, or the like (for example, when a covalent-bond cross-linking moiety is formed by using a compound having three or more hydroxyl groups, two of the hydroxyl groups react with a functional group of the elastomeric polymer having the functional group in a side chain, and the remaining one hydroxyl group is left as a hydroxyl group in some cases depending on the degree of the progress of the reaction, and in such a case, a moiety that can form hydrogen-bond cross-linking can also be introduced). For this reason, the examples of the "compound that forms a covalent-bond cross-linking moiety (compound that forms a covalent bond)," listed herein may also include "compound that forms both a hydrogen-bond cross-linking moiety and a covalent-bond cross-linking moiety". From such a viewpoint, in the case of forming the side chain (b), the side chain (b) may be formed by selecting a compound from "compounds that form a covalent-bond cross-linking moiety (compounds that form a covalent bond)," as appropriate, according to a target design, controlling the degree of the progress of the reaction, as appropriate, or doing the like. Note that when the compound that forms a covalent-bond cross-linking moiety has a heterocycle, a hydrogen-bond cross-linking moiety can also be simultaneously produced more efficiently, and the side chain having a covalent-bond cross-linking moiety can be formed efficiently as the side chain (c) described later. For this reason, specific examples of such compounds each having a heterocycle are described particularly together with the side chain (c) as preferred compounds for producing the side chain (c). Note that because of its structure, the side chain (c) can also be regarded as a preferred mode of side chains such as the side chain (a') and the side chain (b).

As the polyamine compounds, the polyol compounds, the polyisocyanate compounds, and the polythiol compounds usable as the "compound that forms a covalent-bond cross-linking moiety (the compound that forms a covalent bond)," it is possible to use known ones (for example, those described in paragraphs [0094] to [0106] of JP 5918878 B1 or the like), as appropriate.

The functional group of the polymer for constituting the main chain, which reacts with such a "compound that forms a covalent-bond cross-linking moiety (compound that forms a covalent bond)," is preferably a functional group capable of causing (generating: forming) the bond (A), and preferred examples of such a functional group include a cyclic acid anhydride group, a hydroxyl group, an amino group, a carboxy group, an isocyanate group, and a thiol group.

<Side Chain (c): Side Chain Containing Both Hydrogen-Bond Cross-Linking Moiety and Covalent-Bond Cross-Linking Moiety>

The side chain (c) contains both a hydrogen-bond cross-linking moiety and a covalent-bond cross-linking moiety in a single side chain. The hydrogen-bond cross-linking moiety contained in the side chain (c) is the same as the hydrogen-bond cross-linking moiety described for the side chain (a'), and preferred ones thereof are the same as those for the hydrogen-bond cross-linking moiety in the side chain (a). In addition, as the covalent-bond cross-linking moiety contained in the side chain (c), the same covalent-bond cross-linking moiety as that in the side chain (b) can be used (the same also applies to the preferred cross-linkages thereof).

The side chain (c) is preferably one formed by reacting an elastomeric polymer having a functional group in a side chain with a compound that forms both a hydrogen-bond cross-linking moiety and a covalent-bond cross-linking moiety (a compound that introduces both a hydrogen-bond cross-linking moiety and a covalent-bond cross-linking moiety) upon a reaction with the functional group.

The compound that forms both a hydrogen-bond cross-linking moiety and a covalent-bond cross-linking moiety (the compound that introduces both a hydrogen-bond cross-linking moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like. Note that, as the heterocycle-containing polyols, polyamines, and polythiols, it is possible to use, as appropriate, the same ones as the polyol compounds, the polyamine compounds, and the polythiol compounds described for the above-described "compound capable of forming a covalent-bond cross-linking moiety (compound that forms a covalent bond)," except that a heterocycle (particularly preferably a nitrogen-containing heterocycle) is present. In addition, as the heterocycle-containing polyols, polyamines, and polythiols, it is possible to use, as appropriate, known ones (for example, those described in paragraph [0113] of JP 5918878 B1). Note that the functional group of the polymer for constituting the main chain, which reacts with the "compound that forms both a hydrogen-bond cross-linking moiety and a covalent-bond cross-linking moiety (compound that introduces both a hydrogen-bond cross-linking moiety and a covalent-bond cross-linking moiety)," is preferably a functional group capable of causing (generating: forming) the bond (A), and preferred examples of such a functional group include a cyclic acid anhydride group, a hydroxyl group, an amino group, a carboxy group, an isocyanate group, and a thiol group.

(Regarding Structures Preferred as Covalent-Bond Cross-Linking Moieties in Side Chains (b) and (c))

Regarding the side chains (b) and/or (c), from the viewpoint that the compression set and mechanical strengths (elongation at break, breaking strength) of the obtained composition are improved to a higher degree, it is preferable that the cross-linkage at the covalent-bond cross-linking moiety contains a tertiary amino bond (-N<) and/or an ester bond (-COO-), and that the binding sites of these bonds also function as a hydrogen-bond cross-linking moiety. When a tertiary amino bond (-N<) or an ester bond (-COO-) in a side chain having a covalent-bond cross-linking moiety forms a hydrogen bond with another side chain as described above, the covalent-bond cross-linking moiety containing a tertiary amino bond (-N<) or an ester bond (-COO-) will also comprise a hydrogen-bond cross-linking moiety, and can function as the side chain (c).

In the side chains (b) and (c), the cross-linkage at the covalent-bond cross-linking moiety is preferably formed by a reaction between a cyclic acid anhydride group and at least one functional group selected from a hydroxyl group, an amino group, and an imino group. Such a cross-linkage may be a cross-linkage formed, for example, when a polymer that forms the main chain portion after reaction has a cyclic acid anhydride group (for example, a maleic anhydride group) as a functional group, by reacting the cyclic acid anhydride group of the polymer with the compound that forms a covalent-bond cross-linking moiety (a compound that forms a covalent bond) having at least one functional group selected from a hydroxyl group, an amino group, and an imino group, to form a moiety that cross-links by a covalent bond, thereby cross-linking between polymers.

In the side chains (b) and (c), the cross-linkage at the covalent-bond cross-linking moiety is more preferably formed by the bond (A). Moreover, the cross-linkage at the covalent-bond cross-linking moiety in the side chain (b) and/or the side chain (c) may be, for example, one having the same structure as that described in paragraphs [0100] to [0109] of Japanese Unexamined Patent Application Publication No. 2017-206604 or the same structure as that described in paragraphs [0055] to [0061] of International Publication No. WO 2019/027022.

Hereinabove, the side chain (a'), the side chain (a), the side chain (b), and the side chain (c) are described; the groups (structures) and the like of the side chains in the polymers can be identified by ordinarily used analytic techniques such as NMR and IR spectrometry.

The elastomeric polymer (A) may be an elastomeric polymer containing a hydrogen-bond cross-linking moiety and a covalent-bond cross-linking moiety in a side chain and having a glass-transition point of 25°C or below (a polymer having both a side chain (a') and a side chain (b) as side chains, a polymer containing at least one side chain (c) as a side chain, or the like). One of these elastomeric polymers (A) may be used alone, or two or more thereof may be used as a mixture.

Such an elastomeric polymer (A) may be either a polymer having both a side chain (a') and a side chain (b), or a polymer having a side chain (c); from the viewpoint that a stronger hydrogen bond is formed, the hydrogen-bond cross-linking moiety contained in the side chain of the elastomeric polymer (A) is preferably a hydrogen-bond cross-linking moiety having a carbonyl-containing group and/or a nitrogen-containing heterocycle (more preferably a hydrogen-bond cross-linking moiety having a carbonyl-containing group and a nitrogen-containing heterocycle). In addition, the cross-linkage in the covalent-bond cross-linking moiety contained in the side chain of the elastomeric polymer (A) is preferably formed by the bond (A) from the viewpoint that it is also possible to cause intermolecular interactions such as hydrogen bonding between side chains containing the cross-linking moiety.

The elastomeric polymer (A) is preferably a reaction product of an elastomeric polymer having a cyclic acid anhydride group in a side chain and a cross-linking compound (more preferably a compound having two or more of at least one selected from a hydroxyl group, a thiol group, an amino group, and an imino group in one molecule, and further preferably a compound having two or more of at least one selected from a hydroxyl group, a thiol group, an amino group, and an imino group in one molecule and having a nitrogen-containing heterocycle). As the cross-linking compound, it is preferable to use the above-described "compound that forms a hydrogen-bond cross-linking moiety (more preferably a compound capable of introducing a nitrogen-containing heterocycle)" or "compound that forms a covalent-bond cross-linking moiety". Note that as such a "compound that forms a hydrogen-bond cross-linking moiety (more preferably a compound capable of introducing a nitrogen-containing heterocycle)" or "compound that forms a covalent-bond cross-linking moiety (compound that forms a covalent bond)," it is possible to use a known compound (a compound described in Japanese Unexamined Patent Application Publication No. 2017-57322 or JP 5918878 B1) that can react with a cyclic acid anhydride group (preferably a maleic anhydride group), as appropriate.

Here, the elastomeric polymer having a cyclic acid anhydride group in a side chain is preferably an elastomeric polymer modified with maleic anhydride (a maleic anhydride-modified elastomeric polymer). Such an elastomeric polymer modified with maleic anhydride more preferably has a maleation ratio of 0.1 to 20% by mass. Note that the upper limit value of the numeric value range of the maleation ratio is more preferably 15% by mass, and further preferably 10% by mass. The lower limit value of the numeric value range of the maleation ratio is more preferably 0.5% by mass, and further preferably 1.0% by mass. Note that the value of the "maleation ratio" (unit: % by mass) employed in the present specification is determined by employing [Method of Measuring Maleation Ratio] described below.

[Method of Measuring Maleation Ratio]

First, 400 mg of a maleic anhydride-modified polymer to be measured is dissolved in 80 mL of tetrahydrofuran (hereinafter sometimes abbreviated as "THF" for convenience) to obtain a THF solution for measurement. Subsequently, the THF solution for measurement is titrated with a 0.1 mol/L potassium hydroxide solution in ethanol whose factor has been determined to three or more decimal places (standard solution for volumetric analysis: a 0.1 mol/L potassium hydroxide solution in ethanol with correction value: it is also possible to use a commercially available solution whose factor (characteristic value: correction value) is provided to three or more decimal places). Here, the endpoint (point of neutralization) is determined by potentiometric titration using an instrument. In addition, the factor (characteristic value: correction value) of the 0.1 mol/L potassium hydroxide solution in ethanol may be determined by titration with an oxalic acid standard solution, or when a commercially available product whose factor has been determined is used, the factor provided for the commercially available reagent (for example, the factor described in the certificate of analysis of the reagent or the like) may be used, as it is. Subsequently, the amount (blank value) of the 0.1 mol/L potassium hydroxide solution in ethanol added dropwise to 80 mL of THF is also determined by titration conducted by performing measurement (a blank test) that is the same as above, except that no maleic anhydride-modified polymer is used. Next, the determined titration value (amount added dropwise) is used to calculate the acid number on the basis of the "Calculation Formula of Acid Number" described below, and subsequently, the obtained value of the acid number is used to calculate the maleation ratio on the basis of the "Calculation Formula of Maleation Ratio" described below; thus, the maleation ratio (unit: % by mass) is determined.

<Calculation Formula of Acid Number>

$$[\text{Acid Number}] = (A - B) \times M_1 \times C \times f/S$$

(where A represents the amount of the 0.1 mol/L potassium hydroxide solution in ethanol added dropwise to neutralize the solution for measurement (titration value: mL), B represents the amount of the 0.1 mol/L potassium hydroxide solution in ethanol added dropwise in blank (the blank test) (the titration value obtained by conducting the same measurement, except that no maleic anhydride-modified polymer is used (blank value: mL)), $M_1$ represents the molecular weight (56.1 (constant)) of potassium hydroxide, C represents the concentration (0.1 mol/L (constant)) of potassium hydroxide in the potassium hydroxide solution in ethanol, and f represents the factor of the potassium hydroxide solution in ethanol (correction value: the factor indicated for the commercially available reagent (for example, the factor described in the certificate of analysis of the reagent or the like) may be used, as it is), and S represents the mass of the maleic anhydride-modified polymer used for the measurement. Note that the unit of the "acid number" determined by this calculation is "mg KOH/g".)

[Maleation Ratio] = [Acid Number] $\div M_1 \times M_2 \div 1000 \times 100 \div 2$        <Calculation Formula of Maleation Ratio>

(where the acid number represents the value (unit: mg KOH/g) determined by the "Calculation Formula of Acid Number" described above, $M_1$ represents the molecular weight (56.1 (constant)) of potassium hydroxide, and $M_2$ represents the molecular weight (98.1 (constant)) of maleic anhydride. The unit of the "maleation ratio" determined by the calculation is "% by mass").

The cross-linking compound is preferably at least one compound selected from the group consisting of nitrogen-containing compounds having two or more of at least one substituent selected from a hydroxyl group, a thiol group, an amino group, and an imino group (hereinafter, such a substituent is sometimes simply referred to as "substituent (A)") in one molecule, oxygen-containing compounds having two or more of the substituent (A) in one molecule (for example, diethylene glycol, neopentyl glycol, pentaerythritol, trimethylolpropane, and the like), aliphatic compounds having two or more of the substituent (A) in one molecule (for example, glycerin), sulfur-containing compounds having two or more of the substituent (A) in one molecule, and aromatic compounds having two or more of the substituent (A) in one molecule (compounds having an aromatic ring), from the viewpoints of high reactivity and industrial availability.

Such a cross-linking compound is preferably a compound having two or more of the substituent (A) in one molecule from the viewpoint that the reaction proceeds efficiently. Preferred examples of such a compound having two or more of the substituent (A) in one molecule include a compound having two or more of the substituent (A) in one molecule and having a nitrogen-containing heterocycle (the nitrogen-containing heterocycle is more preferably at least one selected from a triazole ring, an isocyanurate ring, a thiadiazole ring, a pyridine ring, an imidazole ring, a triazine ring, a hydantoin ring, and an oxopyrimidine ring), a compound having two or more of the substituent (A) in one molecule and having an aromatic ring (the aromatic ring is more preferably a benzene ring, a naphthalene ring, an indene ring, or an anthracene ring) (benzenetrimethanol, benzenedimethanol), and the like, and among these, a compound having two or more of the substituent (A) in one molecule and having a nitrogen-containing heterocycle is more preferable from the viewpoint that a structural portion capable of forming a hydrogen bond with a generated carboxy group or the like can be introduced (Note that the "nitrogen-containing heterocycle," including preferred ones thereof, herein is the same as that described above). As the compound, for example, one described in paragraph [0049] of International Publication No. WO2020/027109 can be used, as appropriate. One of these compounds may be used alone, or two or more thereof may be used as a mixture.

Such a cross-linking compound is preferably at least one selected from the group consisting of triazoles having at least two of the substituent (A) in one molecule; pyridines having at least two of the substituent (A) in one molecule; thiadiazoles having at least two of the substituent (A) in one molecule; imidazoles having at least two of the substituent (A) in one molecule; isocyanurates having at least two of the substituent (A) in one molecule; triazines having at least two of the substituent (A) in one molecule; hydantoins having at least two of the substituent (A) in one molecule; oxopyrimidines having at least two of the substituent (A) in one molecule (for example, barbituric acid); 1,3,5-benzenetrimethanol; and diethylene glycol. Note that such a substituent (A) is more preferably at least one of a hydroxyl group, an amino group, and an imino group. Triazoles, pyridines, thiadiazoles, imidazoles, isocyanurates, triazines, hydantoins, barbituric acid, and oxopyrimidines having at least two of the substituent (A) in one molecule may have a substituent other than the substituent (A).

Such a cross-linking compound is more preferably tris(2-hydroxyethyl) isocyanurate, 2,4-diamino-6-phenyl-1,3,5-triazine, 1,3,5-benzenetrimethanol, or diethylene glycol, and further preferably tris(2-hydroxyethyl) isocyanurate, 1,3,5-benzenetrimethanol, or diethylene glycol, and among these, tris(2-hydroxyethyl) isocyanurate and 2,4-diamino-6-phenyl-1,3,5-triazine are particularly preferable from the viewpoint that a hydrogen-bond cross-linking moiety can be introduced together with a covalent-bond cross-linking moiety more efficiently. One of these cross-linking compounds may be used alone, or two or more thereof may be used in combination.

The method for obtaining the elastomeric polymer (A) is not particularly limited; the method may be any, as long as a reaction product of the elastomeric polymer having a cyclic acid anhydride group in a side chain and the cross-linking compound can be obtained by reacting a cyclic acid anhydride group (preferably a maleic anhydride group) in the elastomeric polymer having a cyclic acid anhydride group in a side chain with a functional group (for example, the substituent (A)) in the cross-linking compound, and the conditions for the reaction may be selected, as appropriate, according to the type of the cross-linking compound and the like. For example, a method may be employed in which while the elastomeric polymer having a cyclic acid anhydride group in a side chain is being mixed (kneaded) by using a kneading machine such as a kneader at a temperature (for example, about 100 to 250°C) at which the elastomeric polymer having a cyclic acid anhydride group in a side chain can be plasticized and the cross-linking compound to be added and the cyclic acid anhydride group can be reacted with each other, the cross-linking compound is added to conduct the reaction. The method for producing such an elastomeric polymer (A) is not particularly limited, and a production method may be employed in which components to be used are selected, as appropriate, so as to obtain a desired structure, and production is carried out by employing the same method as a known method (for example, the method described in JP 5918878 B1 (the method described in paragraphs [0139] to [0140], etc.)).

(Carbon Black)

The carbon black according to the present invention is not particularly limited, and it is possible to use a known carbon black that can be used for thermoplastic elastomer compositions, as appropriate. Among such carbon blacks, furnace blacks such as SAF, ISAF, HAF, XCF, FEF, GPF, SRF, MT, and FT are preferable from the viewpoints of reinforcement and dispersibility. As such a carbon black, those with grades of ISAF, HAF, and FEF are preferable. As such a carbon black, a commercially available one (commercial product) may be used as it is. Note that such a carbon black is an effective component for forming a tread portion of a tire, particularly a cap tread portion.

(Phosphorus-Based Plasticizer)

As the phosphorus-based plasticizer according to the present invention, a known phosphorus-based compound that can be used as a plasticizer can be used, as appropriate, and is not particularly limited, but is preferably a phosphate ester because of its excellent thermal stability.
Such a phosphate ester is preferably an alkyl phosphate ester or an aromatic phosphate ester, and particularly preferably an alkyl phosphate ester, due to high compatibility. Examples of such an alkyl phosphate ester include monoalkyl phosphate esters, dialkyl phosphate esters, and trialkyl phosphate esters, and among these, a trialkyl phosphate ester is particularly preferable because a particularly high effect in terms of thermal stability can be obtained. The alkyl group in such an alkyl phosphate ester (more preferably a trialkyl phosphate ester) preferably has 1 to 20 carbon atoms (more preferably 1 to 18 carbon atoms). If the number of carbon atoms exceeds the upper limit, it tends to be difficult to efficiently obtain the effect of imparting plasticity to the composition.
Such a phosphorus-based plasticizer is preferably at least one selected from the group consisting of trioctyl phosphate, trimethyl phosphate, triethyl phosphate, tributyl phosphate, tris(2-ethylhexyl) phosphate, triphenyl phosphate, tricresyl phosphate, trixylenyl phosphate, cresyl diphenyl phosphate, 2-ethylhexyl diphenyl phosphate, triphenyl phosphite, and condensed phosphate esters thereof, and among these, tris(2-ethylhexyl) phosphate is particularly preferable from the viewpoint of high compatibility.

(Vulcanization Accelerator)

The vulcanization accelerator according to the present invention is at least one selected from the group consisting of a thiuram-based vulcanization accelerator and a metal dithiocarbamate which is a metal salt of the thiuram-based vulcanization accelerator. Such a vulcanization accelerator may be a thiuram-based vulcanization accelerator and/or a metal dithiocarbamate which is a metal salt thereof (a metal salt of a thiuram-based vulcanization accelerator), and is not particularly limited, and a known compound used as these vulcanization accelerators in the field of rubber or the like can be used, as appropriate. Examples of such a thiuram-based vulcanization accelerator and a metal dithiocarbamate include tetrakis(2-ethylhexyl) thiuram disulfide (TOT-N), tetramethylthiuram monosulfide, tetramethylthiuram disulfide, tetraethylthiuram disulfide, tetrabenzylthiuram disulfide, dipentamethylenethiuram tetrasulfide, zinc dimethyldithiocarbamate, zinc diethyldithiocarbamate, zinc dibutyldithiocarbamate, zinc ethylphenyldithiocarbamate, zinc N-pentamethylenedithiocarbamate, zinc dibenzyldithiocarbamate, sodium dibutyldithiocarbamate, copper dimethyldithiocarbamate, tellurium diethyldithiocarbamate, and zinc isopropylxanthate.
Such a vulcanization accelerator is more preferably a thiuram-based vulcanization accelerator from the viewpoints of high breaking properties and high compatibility, and among these, at least one thiuram-based vulcanization accelerator selected from the group consisting of tetrakis(2-ethylhexyl) thiuram disulfide, tetramethylthiuram disulfide, tetraethylthiuram disulfide, tetrabutylthiuram disulfide, tetramethylthiuram monosulfide, tetrabenzylthiuram disulfide, and dipentamethylenethiuram tetrasulfide is preferable, and at least one thiuram-based vulcanization accelerator selected from the group consisting of tetrakis(2-ethylhexyl) thiuram disulfide, tetrabutylthiuram disulfide, and tetrabenzylthiuram disulfide is more preferable. At least one thiuram-based vulcanization accelerator selected from the group consisting of tetrabutylthiuram disulfide and tetrakis(2-ethylhexyl) thiuram disulfide is particularly preferable as such a vulcanization accelerator, because the inclusion of a large alkyl group (a long alkyl group such as a butyl group or a 2-ethylhexyl group) provides a higher effect in terms of compatibility and improvement of breaking properties based on an increase in energy loss due to interaction between side chains when introduced into a side chain.

(Regarding Composition)

The thermoplastic elastomer composition of the present invention is a composition containing the elastomeric polymer (A), the carbon black, the phosphorus-based plasticizer, and the vulcanization accelerator.

Note that in the composition, since at least a part (or all) of the elastomeric polymer (A) and at least a part (or all) of the vulcanization accelerator can form a reaction product (when a double bond-containing monomer unit is contained in the main chain backbone, the vulcanization accelerator can react with the double bond portion), at least a part (or all) of the elastomeric polymer (A) and at least a part (or all) of the vulcanization accelerator may be contained in the composition in the form of a reaction product thereof (a reaction product of the elastomeric polymer (A) and the vulcanization accelerator). Thus, in the present invention, the elastomeric polymer (A) and the vulcanization accelerator may be contained in the composition in the form of a reaction product thereof as their respective components.

In such a thermoplastic elastomer composition, the amount of the elastomeric polymer (A) contained is preferably 10 to 80% by mass, more preferably 35 to 75% by mass, and particularly preferably 45 to 65% by mass, relative to the total amount of the composition (the total amount (the entire amount) of all components contained in the thermoplastic elastomer composition). By setting the amount of the elastomeric polymer (A) contained to be equal to or greater than the lower limit, a higher effect tends to be obtained in terms of resistance to compression set, heat resistance, and creep resistance, as compared with a case where the amount is less than the lower limit; on the other hand, by setting the amount to be equal to or less than the upper limit, a higher effect tends to be obtained in terms of fluidity, as compared with a case where the amount exceeds the upper limit.

The thermoplastic elastomer composition of the present invention contains the elastomeric polymer (A) as a base material (main material), but may also contain an additional elastomeric polymer other than the elastomeric polymer (A) (hereinafter simply referred to as "additional elastomeric polymer") together with the elastomeric polymer (A). Such an additional elastomeric polymer is preferably an elastomeric polymer that does not contain a chemical-bond cross-linking moiety. Here, the "chemical-bond cross-linking moiety" refers to a moiety in which a cross-linkage is formed by a chemical bond such as a hydrogen bond, a covalent bond, or an ionic bond. As such an elastomeric polymer that does not contain a chemical-bond cross-linking moiety, the same ones as those described as the polymer constituting the main chain of the elastomeric polymer (A) can be used, as appropriate, and among these, a diene-based rubber and a hydrogenated product of a diene-based rubber are preferable from the viewpoint of compatibility. Among such diene-based rubbers and hydrogenated products of diene-based rubbers, a hydrogenated styrene-butadiene copolymer is particularly preferable from the viewpoints of compatibility and oxidation resistance.

When the thermoplastic elastomer composition of the present invention contains the additional elastomeric polymer (preferably an elastomeric polymer that does not contain a chemical-bond cross-linking moiety), the elastomeric polymer component that functions as a base material (main material) of the composition (hereinafter simply referred to as "elastomer component") is a combination of the elastomeric polymer (A) and the additional elastomeric polymer.

Thus, the thermoplastic elastomer composition of the present invention can be a composition containing: an elastomer component containing the elastomeric polymer (A) (the elastomer component may consist only of the elastomeric polymer (A), or may consist of the elastomeric polymer (A) and the additional elastomeric polymer); the carbon black; the phosphorus-based plasticizer; and the vulcanization accelerator. Note that in the thermoplastic elastomer composition of the present invention, the amount of the elastomeric polymer (A) contained in the elastomer component is more preferably 30% by mass or more, and further preferably 40% by mass or more, relative to the total amount of the elastomeric polymer (A) and the additional elastomeric polymer (the total amount of the elastomer component), from the viewpoints of improving resistance to compression set, heat resistance, and creep resistance.

The amount (content ratio) of the carbon black contained in the thermoplastic elastomer composition is not particularly limited, but is more preferably 10 to 70 parts by mass, further preferably 20 to 60 parts by mass, and particularly preferably 30 to 50 parts by mass relative to 100 parts by mass of the elastomer component containing the elastomeric polymer (A) (100 parts by mass of the elastomeric polymer (A) when the elastomer component consists only of the elastomeric polymer (A)). By setting the amount of the carbon black contained to be equal to or greater than the lower limit, a higher effect tends to be obtained in terms of wear resistance and breaking strength upon heating, as compared with a case where the amount is less than the lower limit, because the amount of filler is increased; on the other hand, by setting the amount to be equal to or less than the upper limit, a higher effect tends to be obtained in terms of fluidity, as compared with a case where the amount exceeds the upper limit, because the amount of filler is decreased.

The amount (content ratio) of the phosphorus-based plasticizer contained in the thermoplastic elastomer composition is not particularly limited, but is more preferably 5 to 60 parts by mass, further preferably 10 to 50 parts by mass, and particularly preferably 20 to 40 parts by mass relative to 100 parts by mass of the elastomer component containing the elastomeric polymer (A) (100 parts by mass of the elastomeric polymer (A) when the elastomer component consists only of the elastomeric polymer (A)). By setting the amount of the phosphorus-based plasticizer contained to be equal to or greater than the lower limit, a higher effect tends to be obtained in terms of fluidity and breaking properties, as compared with a case where the amount is less than the lower limit, because the amount of the plasticizer is increased; on the other hand, by setting the amount to be equal to or less than the upper limit, a higher effect tends to be obtained in terms of heat resistance (breaking properties upon heating), as compared with a case where the amount exceeds the upper limit, because the amount of the plasticizer is decreased.

Moreover, the amount (content ratio) of the vulcanization accelerator contained in the thermoplastic elastomer composition is not particularly limited, but is more preferably 0.1 to 30 parts by mass, further preferably 0.5 to 20 parts by mass, and particularly preferably 1 to 15 parts by mass relative to 100 parts by mass of the elastomer component containing the elastomeric polymer (A) (100 parts by mass of the elastomeric polymer (A) when the elastomer component consists only of the elastomeric polymer (A)). By setting the amount of the vulcanization accelerator contained to be equal to or greater than the lower limit, a higher effect tends to be obtained in terms of breaking properties, as compared with a case where the amount is less than the lower limit, because the amount of alkyl groups introduced derived from the vulcanization accelerator is increased; on the other hand, by setting the amount to be equal to or less than the upper limit, the amount of alkyl groups introduced derived from the vulcanization accelerator can be efficiently adjusted to an appropriate range, and a higher effect tends to be obtained in terms of creep resistance, as compared with a case where the amount exceeds the upper limit.

The thermoplastic elastomer composition of the present invention can use, as appropriate, a known additive (additive component) used in the field of thermoplastic elastomer compositions within a range not departing from an object of the present invention, if necessary. However, the thermoplastic elastomer composition of the present invention preferably does not contain a clay (including an organically modified clay) from the viewpoint that a decrease in breaking properties can be suppressed to a higher degree. This is because in the system of the thermoplastic elastomer composition of the present invention, if a clay is present in the system, the clay tends to become a starting point of breakage, resulting in a decrease in breaking strength and elongation at break. Thus, the thermoplastic elastomer composition of the present invention preferably does not contain a clay as an additive.

Examples of the additive (additive component) which can be preferably used for the thermoplastic elastomer composition of the present invention include known additives other than the clay, for example, polymers other than the elastomer component, reinforcing agents (fillers), hydrogen-bonding reinforcing agents (fillers), fillers to which amino groups are introduced (hereinafter simply referred to as "amino group-introduced fillers"), amino group-containing compounds other than the amino group-introduced fillers, metal element-containing compounds (hereinafter simply referred to as "metal salts"), maleic anhydride-modified polymers, anti-aging agents, antioxidants, pigments (dyes), plasticizers, thixotropy-imparting agents, ultraviolet absorbers, flame retardants, solvents, surfactants (including leveling agents), fillers, dispersing agents, dehydrating agents, corrosion inhibitors, tackifiers, and antistats. Such additives are not particularly limited, and known ones can be used, as appropriate; for example, those described in Japanese Unexamined Patent Application Publication No. 2017-57322 or International Publication No. WO 2019/027022 may be used, as appropriate. Note that in the thermoplastic elastomer composition of the present invention, it is also possible to more efficiently exhibit properties suitable for the application by changing the type or the like of the elastomeric polymer (A) or using an additive, as appropriate, according to the application.

The applications of the thermoplastic elastomer composition of the present invention are not particularly limited, and the thermoplastic elastomer composition of the present invention can be preferably applied as, for example, a material for forming tires, various products for powertrains of various automobiles and the like, various products for hybrid and electric vehicles, various products for diesel engines, various automotive products such as starters, alternators, engine cooling products, and drive system products, and the like. Thus, the applications of the thermoplastic elastomer composition of the present invention are not particularly limited, but the thermoplastic elastomer composition of the present invention can be preferably used as a material for forming rubber parts for industrial use (rubber parts used in various industrial products such as the above-described various automotive products and rubber parts used in industrial machines and the like). Since the thermoplastic elastomer composition of the present invention is excellent in creep resistance (resistance to compression set), wear resistance, breaking strength upon heating, and elongation at break upon heating, it can be preferably used particularly for a material used in producing a tire (an elastomer material for a tire).

The method for producing such a thermoplastic elastomer composition is not particularly limited; the method may be any, as long as the elastomeric polymer (A), the carbon black, the phosphorus-based plasticizer, and the vulcanization accelerator can be contained in the composition (and the above-described additives can also be contained in the composition, if necessary), and the same method as that employed in known methods for producing a thermoplastic elastomer composition (for example, the method described in JP 5918878 B1 or the like) can be employed, as appropriate, except that the components to be used are changed so that the above-described components can be contained. The method for producing such a thermoplastic elastomer composition is not particularly limited; for example, a method may be employed in which a composition is obtained by kneading (mixing) the elastomeric polymer having a cyclic acid anhydride group in a side chain, the cross-linking compound, the carbon black, the phosphorus-based plasticizer, and the vulcanization accelerator, and in this case, it is more preferable to employ a method in which, from the viewpoint that each component can be dispersed more uniformly, first, the elastomeric polymer having a cyclic acid anhydride group in a side chain, the carbon black, the phosphorus-based plasticizer, and the vulcanization accelerator are kneaded (mixed) to obtain a mixture, and then the cross-linking compound is added to the mixture followed by kneading (mixing), to thereby cause a reaction between the elastomeric polymer having a cyclic acid anhydride group in a side chain and the cross-linking compound (and further with the vulcanization accelerator in some cases) in the mixture in which the carbon black, the phosphorus-based plasticizer, and the vulcanization accelerator are dispersed, to thereby obtain a composition containing the elastomeric polymer (A), the carbon black, the phosphorus-based plasticizer, and the vulcanization accelerator. The temperature condition for kneading the elastomeric polymer having a cyclic acid anhydride group in a side chain, the carbon black, the phosphorus-based plasticizer, and the vulcanization accelerator is not particularly limited, and may be set, as appropriate, according to the type of the elastomeric polymer to a temperature at which the polymer can be plasticized and each component can be uniformly mixed. The temperature condition for reacting the elastomeric polymer having a cyclic acid anhydride group in a side chain with the cross-linking compound is not particularly limited, either, and may be set, as appropriate, to a temperature at which the cross-linking compound to be added and the cyclic acid anhydride group can be reacted with each other (for example, about 100 to 250°C). Note that it is also possible that when the cross-linking compound is added, a kneaded product (a composition in which the cross-linking compound is in an unreacted state) is produced by kneading at a temperature lower than the reaction temperature (for example, about normal temperature to 120°C), and when the kneaded product is molded, the cross-linking compound and the cyclic acid anhydride group are reacted with each other, to thereby form a composition containing the elastomeric polymer (A), the carbon black, the phosphorus-based plasticizer, and the vulcanization accelerator at the time of molding. The method for kneading each component is not particularly limited, and, for example, a method of kneading by using a roll, a kneader, an extruder, an all-purpose mixer, or the like can be employed. The elastomeric polymer having a cyclic acid anhydride group in a side chain is not particularly limited, and a commercially available one may be used, or one produced, as appropriate, by a known method may be used.

Note that, as a preferred example of the method for producing a thermoplastic elastomer composition, for example, the following method may be employed. Specifically, first, an elastomeric polymer having a cyclic acid anhydride group in a side chain that contains a double bond-containing monomer unit in the main chain backbone is used, and the elastomeric polymer, the carbon black, the phosphorus-based plasticizer, and the vulcanization accelerator are kneaded (mixed) at about 180°C to obtain a mixture in which the vulcanization accelerator is reacted with the double bond of the double bond-containing monomer unit. Subsequently, the cross-linking compound is added to the mixture, and the mixture is kneaded (mixed) at 120°C or below to obtain a kneaded product containing the cross-linking compound in an unreacted state. Then, the kneaded product is heated to allow the cross-linking reaction to proceed, to thereby produce a thermoplastic elastomer composition. When such a method is employed, in the obtained composition, the elastomeric polymer (A) and the vulcanization accelerator can be contained in the form of a reaction product thereof (a reaction product of the elastomeric polymer having a cyclic acid anhydride group in a side chain, the vulcanization accelerator, and the cross-linking compound). When such a method is employed, since the cross-linking by the cross-linking compound does not proceed at the stage where the kneaded product is produced, the molding process can be allowed to proceed more easily, and it is also possible to efficiently obtain a rubber product of a desired form by cross-linking by, after shaping the kneaded product, putting it in a mold and heating it.

[Elastomer Material for Tire]

An elastomer material for a tire of the present invention comprises the above-described thermoplastic elastomer composition of the present invention. Such an elastomer material for a tire can be used as, for example, a material for forming a cap tread portion, a sidewall portion, an undertread portion, an inner liner portion, a carcass portion, a belt portion, and a bead portion of a tire, and the site where it is used in an actual tire is not particularly limited. Note that it is preferable to use it for a cap tread portion and a sidewall portion of a tire from the viewpoints of excellent creep resistance and wear resistance. The method for producing a tire using such an elastomer material for a tire is not particularly limited, and a known method can be used, as appropriate. For example, when a tire in which a cap tread portion is formed from the elastomer material for a tire comprising the thermoplastic elastomer composition of the present invention is produced, as the production method thereof, a method may be employed in which a tire provided with a tread portion formed using the elastomer material for a tire is obtained by using the thermoplastic elastomer composition of the present invention and tire molding by injection molding or extrusion processing according to the shape of the tread. Thus, a tire can be produced by using the elastomer material for a tire comprising the thermoplastic elastomer composition of the present invention, by using a known method, as appropriate. Note that, at the time of tire molding, the tire comprising the thermoplastic elastomer composition of the present invention may be directly produced by using only the thermoplastic elastomer composition of the present invention as the elastomer material for a tire, or a tire may be produced by using the elastomer material for a tire in a form comprising a mixture of the thermoplastic elastomer composition of the present invention and additional components (for example, an uncross-linked rubber, a vulcanization agent, and the like) and curing by heating and vulcanization. Thus, since the thermoplastic elastomer composition of the present invention can be directly molded into a tire, the elastomer material for a tire of the present invention may be used as it is as one consisting only of the thermoplastic elastomer composition of the present invention without adding additional components, according to the application or the like. In other words, a tire obtained by using the elastomer material for a tire of the present invention may be one obtained by directly forming a constituent part of a tire from the thermoplastic elastomer composition of the present invention, or may be one obtained by forming a constituent part of a tire by molding with the addition of additional components, according to the application, the part to be formed (tread portion, etc.), or the like. Thus, the thermoplastic elastomer composition of the present invention may be directly molded into a tire and used, or may be molded into a tire by adding additional components to form a thermoset product.

Examples

Hereinafter, the present invention is described more specifically based on Examples and Comparative Examples, but the present invention is not limited to the following examples.

<Regarding Components Used in Each of Examples and the like>

Hereinafter, the components and abbreviations used in each of Examples and the like are first described. Note that in each of Examples and the like and in Tables, each component is sometimes described using the following abbreviations. The "maleation ratio" of the maleic anhydride-modified elastomeric polymer described below is a value measured by the [Method of Measuring Maleation Ratio] described above. Note that in Example 12, an anti-aging agent (manufactured by Ouchi Shinko Chemical Industrial Co., Ltd., trade name "NOCRAC 6C") and an acid catalyst (commercially available "p-toluenesulfonic acid monohydrate") were used in addition to the following components.

(1) Elastomer Component (Elastomeric Polymer)

<Maleic Anhydride-Modified Elastomeric Polymer>

• (First Polymer)

Maleic anhydride-modified ethylene-butene copolymer (abbreviation: maleated EBM, trade name "TAFMER MH5040" manufactured by Mitsui Chemicals, Inc., maleation ratio: 2.2% by mass, degree of crystallinity: 4%)

• (Second Polymer)

Maleic anhydride-modified hydrogenated styrene-butadiene copolymer (abbreviation: maleated hydrogenated SBR-(I), one prepared in Synthesis Example 1 described later was used, maleation ratio: 2.59% by mass)

• (Third Polymer)

Maleic anhydride-modified hydrogenated styrene-butadiene copolymer (abbreviation: maleated hydrogenated SBR-(II), one synthesized in Example 12 described later was used, maleation ratio: 1.8% by mass) <Elastomeric Polymer Having No Chemical-Bond Cross-Linking Moiety>

• (Fourth Polymer)

Hydrogenated styrene-butadiene copolymer (abbreviation: hydrogenated SBR, trade name "NT120" manufactured by ENEOS Materials Corporation, an elastomeric polymer having no chemical-bond cross-linking moiety)

(2) Cross-Linking Compound

• Tris(2-hydroxyethyl) isocyanurate (abbreviation: THI: trade name "TANAC P" manufactured by NISSEI CORPORATION, a compound capable of introducing a covalent-bond cross-linking moiety and a hydrogen-bond cross-linking moiety upon reaction with a maleic anhydride group)
• Diethylene glycol (manufactured by Tokyo Chemical Industry Co., Ltd., a compound capable of introducing a covalent-bond cross-linking moiety and a hydrogen-bond cross-linking moiety upon reaction with a maleic anhydride group)

- 1,3,5-Benzenetrimethanol (manufactured by Tokyo Chemical Industry Co., Ltd., a compound capable of introducing a covalent-bond cross-linking moiety and a hydrogen-bond cross-linking moiety upon reaction with a maleic anhydride group)
- 3-Amino-1,2,4-triazole (abbreviation: ATA (cross-linking compound for comparison), manufactured by Tokyo Chemical Industry Co., Ltd., a compound capable of introducing only a hydrogen-bond cross-linking moiety as a cross-linking moiety upon reaction with a maleic anhydride group)

(3) Plasticizer (Oil)

- Tris(2-ethylhexyl) phosphate (abbreviation: phosphorus-based plasticizer: trade name "TOP" manufactured by Daihachi Chemical Industry Co., Ltd.)
- Paraffin oil (plasticizer for comparison: trade name "300HV-S(J)" manufactured by ENEOS Corporation)
- Aroma oil (plasticizer for comparison: trade name "T-DAE" manufactured by ENEOS Corporation)

(4) Carbon Black

- Carbon black N339 (abbreviation: CB, manufactured by Tokai Carbon Co., Ltd.)

(5) Vulcanization Accelerator

- Tetrakis(2-ethylhexyl) thiuram disulfide (abbreviation: thiuram-based vulcanization accelerator (I), trade name "NOCCELER TOT-N" manufactured by Ouchi Shinko Chemical Industrial Co., Ltd.)
- Tetrabutylthiuram disulfide (abbreviation: thiuram-based vulcanization accelerator (II), trade name "NOCCELER TBT-N" manufactured by Ouchi Shinko Chemical Industrial Co., Ltd.)
- N-Cyclohexyl-2-benzothiazolylsulfenamide (abbreviation: sulfenamide-based vulcanization accelerator (vulcanization accelerator for comparison), trade name "NOCCELER CZ-G" manufactured by Ouchi Shinko Chemical Industrial Co., Ltd.)
- 1,3-Diphenylguanidine (abbreviation: guanidine-based

vulcanization accelerator (vulcanization accelerator for comparison), trade name "NOCCELER DPG" manufactured by Ouchi Shinko Chemical Industrial Co., Ltd.).

(Synthesis Example 1: Preparation of Maleated Hydrogenated SBR-(I))

First, 70 g of hydrogenated SBR (manufactured by ENEOS Materials Corporation, trade name: NT120), which was a raw material polymer, was charged into a pressure kneader (manufactured by TOYO SEIKI SEISAKU-SHO, LTD., trade name: Labo Plastomill (using R100 mixer)), and kneaded for 60 seconds under the conditions of a temperature of 90°C and a rotation speed of 50 rpm. Next, 7 g of maleic anhydride (manufactured by Tokyo Chemical Industry Co., Ltd.), 3.5 g of tris(2-ethylhexyl) phosphate (manufactured by Daihachi Chemical Industry Co., Ltd., trade name "TOP"), and 0.7 g of an anti-aging agent (manufactured by Ouchi Shinko Chemical Industrial Co., Ltd., trade name "NOCRAC 6C") were charged into the pressure kneader, and the mixture was further kneaded for 10 minutes under the conditions of a temperature of 90°C and a rotation speed of 50 rpm, and then the mixture was discharged. The thus discharged mixture was charged again into the pressure kneader (manufactured by TOYO SEIKI SEISAKU-SHO, LTD., trade name: Labo Plastomill (using R100 mixer)), kneaded for 30 minutes under the conditions of a temperature of 250°C and a rotation speed of 50 rpm, and then discharged. The thus discharged mixture was dried under reduced pressure at 160°C for 3 hours, and then unreacted maleic anhydride was distilled off, to thereby obtain a hydrogenated SBR modified with maleic anhydride (hereinafter simply referred to as "maleated hydrogenated SBR-(I)").

(Example 1)

Components as raw materials were used in the ratios shown in Table 1, and a thermoplastic elastomer was prepared as follows. Specifically, first, maleated EBM (20 g) as an elastomer component and maleated hydrogenated SBR-(I) (20 g) as an elastomer component were charged into a pressure kneader with a capacity of 100 cc, and masticated for 2 minutes under the conditions of a temperature of 180°C and a rotation speed of 20 rpm, to thereby plasticize the elastomer components. Thereafter, carbon black N339 (CB: 16 g), tris(2-ethylhexyl) phosphate (phosphorus-based plasticizer: 12 g) as a plasticizer, and tetrakis(2-ethylhexyl) thiuram disulfide (thiuram-based vulcanization accelerator (I): 1.2 g) as a vulcanization accelerator were added to the plasticized elastomer components, and the mixture was kneaded for 4 minutes to obtain a mixture, and then trishydroxyisocyanurate (THI: 0.851 g), which was a cross-linking compound, was further added, and the mixture was kneaded for 8 minutes, to thereby prepare a thermoplastic elastomer composition. Note that it is clear from the preparation process that the thermoplastic elastomer composition contains a reaction product of maleated EBM and THI and a reaction product of maleated hydrogenated SBR-(I) and THI.

(Examples 2 to 11 and Comparative Examples 1 to 9)

A thermoplastic elastomer composition was produced in the same manner as in Example 1, except that the types and amounts of components as raw materials (types and amounts of elastomer components, types and amounts of cross-linking compounds, and types and amounts of vulcanization accelerators) were changed so as to have the composition shown in Table 1. Note that a blank in the raw material column of Table 1 indicates that the component was not used.

[Evaluation of Properties of Thermoplastic Elastomer Composition Obtained in Each of Examples and the like]

<Preparation of Sheet>

Using each of the thermoplastic elastomer compositions obtained in each of Examples and the like, a sheet for use in the evaluation of the properties of the composition was prepared as follows. Specifically, first, using a pressure press machine with a water cooling function, after heating to 200°C, 42 g of a thermoplastic elastomer composition was placed in a mold having a size of 15 cm in length, 15 cm in width, and 2 mm in thickness, heated (preheated) at 200°C for 3 minutes before pressing, and then pressed (hot pressed) under the conditions of a temperature of 200°C, a working pressure of 18 MPa, and a pressing time of 5 minutes, and then a water cooling press was further performed under the conditions of a working pressure of 18 MPa and a pressing time of 2 minutes, and the thermoplastic elastomer composition after pressing was taken out from the mold, to thereby prepare a 2 mm thick sheet. Note that such a sheet was used when performing "Measurement of Compression Set (C-Set)" and "Measurement of Breaking Strength (TB) and Elongation at Break (EB)" described later.

<Measurement of Compression Set (C-Set)>

From the 2 mm thick sheet obtained as described above, seven disk-shaped sheets with a diameter of 29 mm were punched out, and then the obtained seven disk-shaped sheets were stacked on top of each other to prepare a sample for measurement having a height (thickness) of 12.5±0.5 mm. Subsequently, the sample for measurement was compressed by 25% with a dedicated jig, left to stand at 70°C for 22 hours, and then the pressure was released, and the compression set (unit: %) was measured in accordance with JIS K6262 (published in 2013). Note that as a compression device, trade name "Vulcanized Rubber Compression Set Tester SCM-1000LAKC" manufactured by Dumbbell Co., Ltd. was used. The obtained results are shown in Table 1. When the compression set thus measured is 47% or less (more desirably 45% or less), it can be evaluated that the creep resistance is at a high level.

<Measurement of Wear Resistance>

First, using 15 g of each of the thermoplastic elastomer compositions obtained in each of Examples and each of Comparative Examples, disk-shaped samples with a diameter of 16.0 mm and a thickness of 8 mm were prepared using a dedicated mold. Next, using each of the obtained disk-shaped samples, in accordance with JIS K6264-2 (published in 2005), using a DIN abrasion tester (a rotating cylinder type abrasion tester: trade name "DIN Abrasion Tester" manufactured by Yasuda Seiki Seisakusho, Ltd.), a wear resistance test was performed under the conditions of a temperature of room temperature (25°C), a load of 2.5 N, a drum rotation speed of 40 rpm, and a sample lateral feed speed of 2.8 mm/sec, and the amount of wear (mass basis: the ratio (% by mass) of the mass worn by the test to the mass before wear) was measured. The obtained results are shown in Table 1. Note that when the amount of wear is 10% by mass or less, it can be evaluated that the wear resistance is at a high level.

<Measurement of Breaking Strength (TB) and Elongation at Break (EB) upon Heating>

From the 2 mm thick sheet obtained as described above, a No. 3 dumbbell-shaped test piece was punched out, and using a tensile tester with a high-temperature chamber, in accordance with JIS K6251, a tensile test was performed under the conditions of a temperature of 90°C and a tensile speed of 500 mm/min, and the breaking strength TB (unit: MPa) and the elongation at break EB (unit: %) were measured. The obtained results are shown in Table 1. Note that when the breaking strength upon heating at 90°C is 2.80 MPa or more, it can be evaluated that the breaking strength is excellent, and when the elongation at break upon heating at 90°C is 80% or more, it can be evaluated that the elongation at break is excellent. When the breaking strength upon heating at 90°C is 2.80 MPa or more and the elongation at break upon heating at 90°C is 80% or more, it can be evaluated that the heat resistance based on the breaking strength and elongation at break upon heating is at a high level.

[Table 1]

| | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|---|---|---|
| **Elastomer component** — Maleated EBM (first polymer) | 50 | 50 | 50 | 50 | 50 | 100 | | | | 50 | 50 | 50 | 50 | 50 | 50 | 50 | 50 | 50 | 50 | 50 |
| Maleated hydrogenated SBR-(I) (second polymer) | 50 | 50 | 50 | 50 | 50 | | 100 | 50 | 50 | 50 | 50 | 50 | 50 | 50 | 50 | 50 | 50 | 50 | 50 | 50 |
| Hydrogenated SBR (fourth polymer) | | | | | | | | 50 | 50 | | | | | | | | | | | |
| **Cross-linking compound** — Tris(2-hydroxyethyl) isocyanurate | 2.127 | 2.127 | 2.127 | 2.127 | 2.127 | 1.955 | 2.298 | 1.149 | 2.127 | | | | | | | 2.127 | 2.127 | 2.127 | 2.127 | 2.127 |
| Diethylene glycol | | | | | | | | | | 1.296 | | | | | | | | | | |
| 1,3,5-Benzenetrimethanol | | | | | | | | | | | 1.369 | | | | | | | | | |
| 3-Amino-1,2,4-triazole (cross-linking compound for comparison) | | | | | | | | | | | | 2.087 | | | | | | | | |
| **Plasticizer (oil)** — Tris(2-ethylhexyl) phosphate (phosphorus-based plasticizer) | 30 | 30 | 30 | 10 | 50 | 30 | 30 | 30 | 30 | 30 | 30 | 30 | 30 | 30 | 30 | 30 | | | 30 | 30 |
| Paraffin oil (plasticizer for comparison) | | | | | | | | | | | | | | | | | 30 | | | |
| Aroma oil (plasticizer for comparison) | | | | | | | | | | | | | | | | | | 30 | | |
| **CB** — Carbon black N339 | 40 | 40 | 40 | 40 | 40 | 40 | 40 | 40 | 40 | 40 | 40 | 40 | 40 | 40 | | 40 | 40 | 40 | 40 | 40 |
| **Vulcanization accelerator** — Thiuram-based vulcanization accelerator (I) | 1 | 3 | 10 | 3 | 3 | 3 | 3 | 3 | 3 | 3 | 3 | 3 | 3 | | 3 | | 3 | 3 | | |
| Sulfenamide-based vulcanization accelerator (vulcanization accelerator for comparison) | | | | | | | | | | | | | | | | | | | 3 | |
| Guanidine-based vulcanization accelerator (vulcanization accelerator for comparison) | | | | | | | | | | | | | | | | | | | | 3 |
| **Total amount of raw materials** (total amount of composition: total of parts by mass) | 173.1 | 175.1 | 182.1 | 155.1 | 195.1 | 175.0 | 175.3 | 174.1 | 175.1 | 174.3 | 174.4 | 175.1 | 173.0 | 170.0 | 133.0 | 172.1 | 175.1 | 175.1 | 175.1 | 175.1 |
| **Compression set** [unit: %] (measurement conditions: 70°C, 22H, 25%) | 28 | 17 | 45 | 20 | 25 | 27 | 17 | 36 | 24 | 22 | 20 | 80 | 72 | 35 | 72 | 30 | 23 | 36 | 48 | 56 |
| **Amount of wear** [unit: % by mass] (DIN abrasion test) | 8.0 | 5.0 | 6.0 | 4.3 | 9.8 | 5.7 | 5.0 | 4.7 | 5.1 | 5.8 | 5.5 | 9.2 | 21.3 | 23.1 | 14.7 | 7.7 | 4.8 | 6.7 | 25.2 | 28.3 |
| **Breaking strength** [unit: MPa] (heating temperature during tensile test: 90°C) | 2.95 | 4.94 | 5.26 | 3.32 | 2.90 | 2.98 | 3.09 | 3.02 | 2.96 | 4.04 | 4.31 | 0.59 | 0.33 | 0.25 | 0.22 | 1.25 | 2.75 | 2.23 | 0.38 | 0.28 |
| **Elongation at break** [unit: %] (heating temperature during tensile test: 90°C) | 133 | 163 | 209 | 80 | 161 | 99 | 103 | 87 | 183 | 175 | 171 | 276 | 246 | 244 | 575 | 103 | 76 | 89 | 289 | 305 |

As is clear from the results shown in Table 1, the thermoplastic elastomer compositions obtained in Examples 1 to 11 were excellent in all of creep resistance (resistance to compression set), wear resistance, breaking strength upon heating, elongation at break upon heating, and heat resistance, and it was found that they have these properties in a well-balanced manner at a high level. Since they have such properties, it was found that the thermoplastic elastomer compositions obtained in Examples 1 to 11 can be preferably used as a material for producing tires. Note that in Examples 1 to 11, a reaction product of maleated EBM and at least one cross-linking compound selected from the group consisting of THI, diethylene glycol, and 1,3,5-benzenetrimethanol (a compound capable of introducing a covalent-bond cross-linking moiety and a hydrogen-bond cross-linking moiety), and/or a reaction product of maleated hydrogenated SBR-(I) and at least one cross-linking compound selected from the group consisting of THI, diethylene glycol, and 1,3,5-benzenetrimethanol are contained in the composition, and it is clear from the structure and the like of the cross-linking compound used that such a reaction product is an elastomeric polymer in which a hydrogen-bond cross-linking moiety and a covalent-bond cross-linking moiety are contained in a side chain. It is also clear that a reaction product of maleated EBM and at least one cross-linking compound selected from the group consisting of THI, diethylene glycol, and 1,3,5-benzenetrimethanol, and a reaction product of maleated hydrogenated SBR-(I) and at least one cross-linking compound selected from the group consisting of THI, diethylene glycol, and 1,3,5-benzenetrimethanol each have a glass-transition point of 25°C or below, from the types of the polymers constituting the main chain thereof (hydrogenated SBR, EBM).

Note that a comparison between Example 9 and Examples 2 and 7 shows that they all contain a reaction product of maleated hydrogenated SBR-(I) and THI in the composition, but in Example 9, the elastomer component as the main material of the composition consists of a mixture of a reaction product of maleated hydrogenated SBR-(I) and THI and hydrogenated SBR, and the composition of Example 9 differs from that of Examples 2 and 7 in that the elastomer component contains an elastomeric polymer other than an elastomeric polymer in which a hydrogen-bond cross-linking moiety and a covalent-bond cross-linking moiety are contained in a side chain (in Examples 2 and 7, the elastomer component consists only of an elastomeric polymer in which a hydrogen-bond cross-linking moiety and a covalent-bond cross-linking moiety are contained in a side chain), and from this comparison, it can be understood that by making the elastomer component consist only of an elastomeric polymer in which a hydrogen-bond cross-linking moiety and a covalent-bond cross-linking moiety are contained in a side chain, creep resistance (resistance to compression set), wear resistance, and breaking strength become more excellent. For this reason, it was found that as the elastomer component as the main material of the composition, one with a higher content of an elastomeric polymer in which a hydrogen-bond cross-linking moiety and a covalent-bond cross-linking moiety are contained in a side chain is desirable from the viewpoints of creep resistance (resistance to compression set), wear resistance, and breaking strength. On the other hand, since Example 9 has excellent elongation at break as compared with Examples 2 and 7, it is also understood that it is effective to use an elastomeric polymer together with an elastomeric polymer in which a hydrogen-bond cross-linking moiety and a covalent-bond cross-linking moiety are contained in a side chain for the elastomer component as the main material of the composition, for example, when a higher elongation is required, depending on the application.

On the other hand, first, the thermoplastic elastomer composition obtained in Comparative Example 1, which differs in composition from Example 2 in that the elastomer component contained in the composition consists of a reaction product of maleated EBM and ATA (containing only a hydrogen-bond cross-linking moiety) and a reaction product of maleated hydrogenated SBR-(I) and ATA (containing only a hydrogen-bond cross-linking moiety), did not have sufficient creep resistance (resistance to compression set) and breaking strength.

The composition obtained in Comparative Example 2 differs in composition from the composition obtained in Example 2 in that a mixture of maleated EBM and maleated hydrogenated SBR-(I) was used as it is as an elastomer component (these were used without being reacted with a cross-linking compound) without containing an elastomeric polymer in which a hydrogen-bond cross-linking moiety and a covalent-bond cross-linking moiety are contained in a side chain in the elastomer component in the composition, but in this case, sufficient properties could not be obtained in terms of creep resistance (resistance to compression set), wear resistance, and breaking strength.

Moreover, the composition obtained in Comparative Example 3 differs in composition from the composition obtained in Example 2 in that a mixture of maleated EBM and maleated hydrogenated SBR-(I) was used as it is as an elastomer component in the composition (these were used without being reacted with a cross-linking compound) and no vulcanization accelerator was used, but such a composition was not sufficient in terms of wear resistance and breaking strength.

The composition obtained in Comparative Example 4 differs in composition from the composition obtained in Example 2 in that a mixture of maleated EBM and maleated hydrogenated SBR-(I) was used as it is as an elastomer component in the composition (these were used without being reacted with a cross-linking compound) and no carbon black was used, but such a composition was not sufficient in terms of wear resistance and breaking strength, either.

Moreover, the composition obtained in Comparative Example 5 differs in composition from the composition obtained in Example 2 in that no thiuram-based vulcanization accelerator was used, but in this case, a high level of breaking strength could not be achieved. Comparative Examples 6 and 7 differ in composition from the composition obtained in Example 2 in that a plasticizer other than a phosphorus-based plasticizer was used, but in that case, it was found that a high level of breaking strength in particular cannot be achieved. Comparative Examples 8 and 9 differ in composition from the composition obtained in Example 2 in that a vulcanization accelerator other than a thiuram-based vulcanization accelerator was used, but in that case, it was found that a high level of creep resistance (resistance to compression set) and breaking strength cannot be achieved.

From the results shown in Table 1, it was found that when an elastomeric polymer in which a hydrogen-bond cross-linking moiety and a covalent-bond cross-linking moiety are contained in a side chain and which has a glass-transition point of 25°C or below, carbon black, a phosphorus-based plasticizer, and a thiuram-based vulcanization accelerator are contained in a composition (Examples 1 to 11), the obtained thermoplastic elastomer composition can have all of creep resistance (resistance to compression set), wear resistance, breaking strength and elongation at break upon heating (heat resistance based on such breaking strength and elongation at break) at a high level, and can have these properties in a well-balanced manner.

(Example 12)

<Synthesis Step of Maleated Hydrogenated SBR-(II)>

In the same manner as the method employed in Synthesis Example 1, a maleic anhydride-modified hydrogenated styrene-butadiene copolymer (maleated hydrogenated SBR-(II)) having a maleation ratio of 1.8% by mass was synthesized separately from Synthesis Example 1.

<Preparation Step of Thermoplastic Elastomer Composition and Sheet Thereof>

Components as raw materials were used in the ratios shown in Table 2, and a thermoplastic elastomer was prepared as follows. Specifically, first, maleated EBM (22 g) as an elastomer component and maleated hydrogenated SBR-(II) (22 g) as an elastomer component were charged into a pressure kneader with a capacity of 100 cc, and masticated for 2 minutes under the conditions of a temperature of 180°C and a rotation speed of 100 rpm, to thereby plasticize the elastomer components. Thereafter, carbon black N339 (CB: 17.6 g), tris(2-ethylhexyl) phosphate (phosphorus-based plasticizer: 6.6 g) as a plasticizer, tetrabutylthiuram disulfide (thiuram-based vulcanization accelerator (II): 1.32 g) as a vulcanization accelerator, and an anti-aging agent (manufactured by Ouchi Shinko Chemical Industrial Co., Ltd., trade name "NOCRAC 6C": 0.44 g) were added to the plasticized elastomer components, and the mixture was kneaded for 8 minutes and discharged, to thereby obtain a mixture. At this time, it is considered that tetrabutylthiuram disulfide is reacted with maleated hydrogenated SBR-(II). Thereafter, the mixture was charged again into a kneader heated to 60°C, and under a temperature condition of 60°C, trishydroxyisocyanurate (THI: 0.782 g), which was a cross-linking compound, and p-toluenesulfonic acid monohydrate (0.171 g), which was an acid catalyst, were added and the mixture was kneaded for 5 minutes, to obtain a kneaded product containing maleated EBM (22 g), maleated hydrogenated SBR-(II) (22 g), the cross-linking compound, carbon black, the phosphorus-based plasticizer, the vulcanization accelerator, the anti-aging agent, and the acid catalyst. Note that considering the temperature condition (60°C) employed during kneading, it is considered that in the obtained kneaded product, the reaction between the maleic anhydride groups in maleated EBM and maleated hydrogenated SBR-(II) and THI has not proceeded.

Subsequently, using a pressure press machine with a water cooling function, 49 g of the kneaded product obtained as described above was placed in a mold having a size of 15 cm in length, 15 cm in width, and 2 mm in thickness, and pressed (hot pressed) under the conditions of a temperature of 200°C, a working pressure of 20 MPa, and a pressing time of 30 minutes, and by heating during the hot pressing, the reaction of maleated EBM and THI and the reaction of maleated hydrogenated SBR-(II) and THI in the kneaded product were allowed to proceed, and then a water cooling press was further performed under the conditions of a working pressure of 20 MPa and a pressing time of 2 minutes, and the product was taken out from the mold, to thereby prepare a 2 mm thick sheet (15 cm in length, 15 cm in width). Note that it is clear from the production conditions that such a sheet consists of a thermoplastic elastomer composition containing a reaction product of maleated EBM and THI, a reaction product of maleated hydrogenated SBR-(II) and THI, a phosphorus-based plasticizer, carbon black, a vulcanization accelerator, an anti-aging agent, and an acid catalyst.

Note that using the 2 mm thick sheet thus obtained, the compression set (C-Set), breaking strength (TB), and elongation at break (EB) were measured by employing the same method as that described in the column of "[Evaluation of Properties of Thermoplastic Elastomer Composition Obtained in Each of Examples and the like]" above, except that the temperature condition for the tensile test was changed from 90°C to 100°C. The obtained results are shown in Table 2. Note that when the breaking strength upon heating at 100°C is 2.80 MPa or more and the elongation at break upon heating at 100°C is 80% or more, it can be evaluated that the heat resistance based on the breaking strength and elongation at break upon heating is at a higher level, because a higher heating condition than that for heating at 90°C is employed.

Regarding Example 12, the measurement of wear resistance was performed by employing the following method. Specifically, first, using 3 g of the kneaded product obtained in Example 12, the kneaded product was heated at a temperature of 200°C for 30 minutes in a dedicated mold, to prepare a disk-shaped sample with a diameter of 16.0 mm and a thickness of 8 mm, consisting of a thermoplastic elastomer composition. Next, using the obtained disk-shaped sample, in accordance with JIS K6264-2 (published in 2005), using a DIN abrasion tester (a rotating cylinder type abrasion tester: trade name "DIN Abrasion Tester" manufactured by Yasuda Seiki Seisakusho, Ltd.), a wear resistance test was performed under the conditions of a temperature of room temperature (25°C), a load of 2.5 N, a drum rotation speed of 40 rpm, and a sample lateral feed speed of 2.8 mm/sec, and the amount of wear (mass basis: the ratio (% by mass) of the mass worn by the test to the mass before wear) was measured. The obtained results are shown in Table 2.

[Table 2]

| | | | Example 12 |
|---|---|---|---|
| Components (parts by mass) | Elastomer component | Maleated EBM (first polymer) | 50 |
| | | Maleated hydrogenated SBR-(II) (third polymer) | 50 |
| | Cross-linking compound | Tris(2-hydroxyethyl) isocyanurate | 1.778 |
| | Phosphorus-based plasticizer | Tris(2-ethylhexyl) phosphate (phosphorus-based plasticizer) | 15 |
| | CB | Carbon black N339 | 40 |
| | Vulcanization accelerator | Thiuram-based vulcanization accelerator (II) | 3 |
| | Anti-aging agent | Anti-aging agent | 1 |
| | Acid catalyst | p-Toluenesulfonic acid monohydrate | 0.388 |
| Total amount of raw materials (total amount of composition: total of parts by mass) | | | 161.17 |
| Properties of composition | Compression set [unit: %] (measurement conditions: 70°C, 22H, 25%) | | 38 |
| | Amount of wear [unit: % by mass] (DIN abrasion test) | | 5.6 |
| | Breaking strength [unit: MPa] (heating temperature during tensile test: 100°C) | | 5.52 |
| | Elongation at break [unit: %] (heating temperature during tensile test: 100°C) | | 238 |

As is clear from the results shown in Table 2, the thermoplastic elastomer composition obtained in Example 12 was excellent in all of creep resistance (resistance to compression set), wear resistance, breaking strength upon heating (heating temperature during measurement was 100°C in Example 12), elongation at break upon heating (heating temperature during measurement was 100°C in Example 12), and heat resistance, and it was found that it has these properties in a well-balanced manner at a high level. Note that in Example 12, a temperature condition of 60°C was employed when adding THI, which was a cross-linking compound, and it is considered that during the kneading of the cross-linking compound, a cross-linking reaction did not proceed, particularly between maleated EBM and maleated hydrogenated SBR-(II) and THI. On the other hand, in Example 12, it is clear that during the heating process of the kneaded product to which the cross-linking compound was added (during hot pressing or during preparation of a disk-shaped sample), due to the heating condition, the reaction between THI, which was a cross-linking compound, and the elastomer component proceeded, so that in the obtained molded article, the elastomeric polymer came to be one in which a hydrogen-bond cross-linking moiety and a covalent-bond cross-linking moiety were contained in a side chain. Note that it is clear that the elastomeric polymers in the obtained molded article each have a glass-transition point of 25°C or below, from the types of the polymers constituting the main chain thereof (hydrogenated SBR, EBM).

Thus, it is also possible to store a kneaded product (mixture) in which the cross-linking compound is in an unreacted state at a stage before molding, and allow the cross-linking reaction to proceed at the time of molding into a product, to thereby produce a molded article of a thermoplastic elastomer composition containing an elastomeric polymer in which a hydrogen-bond cross-linking moiety and a covalent-bond cross-linking moiety are contained in a side chain and which has a glass-transition point of 25°C or below; carbon black; a phosphorus-based plasticizer; and at least one vulcanization accelerator selected from the group consisting of a thiuram-based vulcanization accelerator and a metal dithiocarbamate which is a metal salt of the thiuram-based vulcanization accelerator. Thus, it is also possible to produce a thermoplastic elastomer composition by reacting a maleic anhydride-modified elastomeric polymer with a cross-linking compound at the timing of molding.

Industrial Applicability

As described above, according to the present invention, it is possible to provide a thermoplastic elastomer composition that, while achieving sufficiently high levels of both wear resistance and creep resistance based on resistance to compression set, is excellent in breaking strength and elongation at break upon heating and is capable of achieving a high level of heat resistance based on breaking strength and elongation at break upon heating, as well as an elastomer material for a tire using the same. Thus, since the thermoplastic elastomer composition of the present invention is excellent in creep resistance (resistance to compression set), wear resistance, breaking strength, and elongation at break, it is useful as, in particular, a material used in producing a tire (an elastomer material for a tire) or the like.

**Claims**

1. A thermoplastic elastomer composition, comprising:

   an elastomeric polymer containing a hydrogen-bond cross-linking moiety and a covalent-bond cross-linking moiety in a side chain and having a glass-transition point of 25°C or below;
   carbon black;
   a phosphorus-based plasticizer; and
   at least one vulcanization accelerator selected from the group consisting of a thiuram-based vulcanization accelerator and a metal dithiocarbamate which is a metal salt of the thiuram-based vulcanization accelerator.

2. The thermoplastic elastomer composition according to claim 1, wherein the phosphorus-based plasticizer is a phosphate ester.

3. The thermoplastic elastomer composition according to claim 1, wherein the phosphorus-based plasticizer is tris(2-ethylhexyl) phosphate.

4. The thermoplastic elastomer composition according to claim 1, wherein the vulcanization accelerator is at least one thiuram-based vulcanization accelerator selected from the group consisting of tetrakis(2-ethylhexyl) thiuram disulfide, tetramethylthiuram disulfide, tetraethylthiuram disulfide, tetrabutylthiuram disulfide, tetramethylthiuram monosulfide, tetrabenzylthiuram disulfide, and dipentamethylenethiuram tetrasulfide.

5. The thermoplastic elastomer composition according to claim 1, wherein the vulcanization accelerator is at least one thiuram-based vulcanization accelerator selected from the group consisting of tetrabutylthiuram disulfide and tetrakis(2-ethylhexyl) thiuram disulfide.

6. The thermoplastic elastomer composition according to claim 1, wherein the elastomeric polymer is a reaction product of an elastomeric polymer having a cyclic acid anhydride group in a side chain and a compound having two or more of at least one selected from a hydroxyl group, a thiol group, an amino group, and an imino group in one molecule.

7. An elastomer material for a tire, comprising the thermoplastic elastomer composition according to any one of claims 1 to 6.

## INTERNATIONAL SEARCH REPORT

| | International application No. |
|---|---|
| | **PCT/JP2024/020773** |

### A. CLASSIFICATION OF SUBJECT MATTER

*C08J 11/24*(2006.01)i; *B60C 1/00*(2006.01)i; *C08J 3/24*(2006.01)i; *C08J 11/28*(2006.01)i; *C08K 3/04*(2006.01)i; *C08K 5/00*(2006.01)i; *C08K 5/05*(2006.01)i; *C08K 5/17*(2006.01)i; *C08K 5/36*(2006.01)i; *C08K 5/37*(2006.01)i; *C08K 5/39*(2006.01)i; *C08K 5/49*(2006.01)i; *C08K 5/521*(2006.01)i; *C08K 5/1539*(2006.01)i; *C08K 13/02*(2006.01)i; *C08L 15/00*(2006.01)i; *C08L 21/00*(2006.01)i; *C08L 101/02*(2006.01)i

FI:   C08J11/24; B60C1/00 Z; C08J3/24 Z CEQ; C08J11/28 ZAB; C08K3/04; C08K5/00; C08K5/05; C08K5/1539; C08K5/17; C08K5/36; C08K5/37; C08K5/39; C08K5/49; C08K5/521; C08K13/02; C08L15/00; C08L21/00; C08L101/02

According to International Patent Classification (IPC) or to both national classification and IPC

### B. FIELDS SEARCHED

Minimum documentation searched (classification system followed by classification symbols)

C08J11/24; B60C1/00; C08J3/24; C08J11/28; C08K3/04; C08K5/00; C08K5/05; C08K5/17; C08K5/36; C08K5/37; C08K5/39; C08K5/49; C08K5/521; C08K5/1539; C08K13/02; C08L15/00; C08L21/00; C08L101/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/027022 A1 (JXTG NIPPON OIL & ENERGY CORP.) 07 February 2019 (2019-02-07) | 1-7 |
| A | JP 2006-131663 A (THE YOKOHAMA RUBBER CO., LTD.) 25 May 2006 (2006-05-25) | 1-7 |
| A | JP 11-511200 A (HUTCHINSON) 28 September 1999 (1999-09-28) | 1-7 |

☐ Further documents are listed in the continuation of Box C.      ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| **09 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/020773**

| Patent document cited in search report | | | Publication date (day/month/year) | Patent family member(s) | | | Publication date (day/month/year) |
|---|---|---|---|---|---|---|---|
| WO | 2019/027022 | A1 | 07 February 2019 | US | 2021/0087367 | A1 | |
| | | | | EP | 3663349 | A1 | |
| | | | | CN | 110997791 | A | |
| JP | 2006-131663 | A | 25 May 2006 | US | 2006/0094829 | A1 | |
| | | | | CN | 1769353 | A | |
| JP | 11-511200 | A | 28 September 1999 | US | 6028142 | A | |
| | | | | WO | 1997/044390 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017047274 A
- JP 5918878 B
- JP 2017206604 A
- WO 2019027022 A
- JP 2017057322 A
- WO 2020027109 A